# EUROPÄISCHE PATENTSCHRIFT

(11) **EP 2 817 082 B1**
(45) Veröffentlichungstag und Bekanntmachung des Hinweises auf die Patenterteilung: **22.11.2017**
(21) Anmeldenummer: 13709296.1
(22) Anmeldetag: 14.02.2013
(51) Int. Cl.: B01D 53/70, B01D 53/73, B01D 53/78

(54) **VERFAHREN ZUM ABBAU VON IN ABWÄSSERN UND/ODER ABGASEN ENTHALTENEN TOXISCHEN ORGANISCHEN VERBINDUNGEN**
METHOD FOR DECOMPOSING TOXIC ORGANIC COMPOUNDS FROM WASTE WATER AND/OR WASTE GASES
METHODE POUR DECOMPOSER DES COMPOSES ORGANIQUES TOXIQUES CONTENUS DANS DES EAUX USEES OU DES GAZ RESIDUELS

(30) Priorität: 20.02.2012 AT 2052012
(43) Veröffentlichungstag der Anmeldung: 31.12.2014
(73) Patentinhaber: Commerzialbank Mattersburg im Burgenland Aktiengesellschaft, 7210 Mattersburg (AT)
(72) Erfinder: PHILIPP, Franz, Josef, 63594 Hasselroth (DE)
(74) Vertreter: Patentanwälte Barger, Piso & Partner
(86) Internationale Anmeldenummer: PCT/AT2013/050038
(87) Internationale Veröffentlichungsnummer: WO 2013/123540

(56) Entgegenhaltungen:
- WO-A1-2008/095714
- DE-A1- 19 745 191
- DE-A1- 19 859 443
- FR-A1- 2 720 010

## Beschreibung

Die Erfindung betrifft ein Verfahren zum Abbau von in Abwässern und/oder Abgasen enthaltenen toxischen organischen Verbindungen. Solche toxische organische Verbindungen sind beispielsweise Dioxine und Furane, entsprechend dem Oberbegriff des Anspruches 1 und der DE 197 45 191 A1.

In der DE 197 45 191 A1 ist ein Verfahren zum Abbau von in Abwasser und Abgas enthaltenen toxischen organischen Verbindungen geoffenbart. Dabei wird ein Abgas in einem wässerigen, basischen, alkalischen Lösungsbad behandelt und das Lösungsbad in eine Kapillarmasse geführt.

Die FR 2 720010 A1 offenbart mehrstufige Verfahren zur Reinigung von Rauch sowie Behandlungsverfahren von Rückständen der Rauchreinigung und von Rückständen von Rauch emittierenden Industrieverfahren. Hierin wird insbesondere eine Nassreinigung von Rauchgasen offenbart, wobei eine Behandlung von flüssigem Medium erfolgt, die zweckmäßigerweise an die Erfordernisse der Herstellung von Säuren und Basen aus Salzlösungen angepasst ist.

Die WO 2008/095714 A1 bezieht sich auf die Schaffung eines aus organischen und anorganischen teilchenförmigen Stoffen und/oder Stoffgemischen aufgebauten Materials mit hoher Adsorptionsfähigkeit für möglichst viele umweltbelastende Stoffe. Dieses Material wird großteils aus einer homogenen Matrix gebildet und umfasst einen Restteil aus Zuschlagstoffen wie Ton, Bentonit, Zeolith und Kalk sowie Lignin und/oder Ligninderivate.

Die DE 198 59 443 A1 offenbart ein Absorptions- und/oder Adsorptionsmittel aus einem Gemisch, das wenigstens ein nicht belebtes, biomassehaltiges Material und wenigstens ein anorganisches Bindemittel umfasst.

Aus dem allgemein bekannten Stand der Technik sind sogenannte Biofilter bekannt, welche zur Reinigung und insbesondere üblicherweise zur Geruchsbekämpfung von Abwässern oder Abgasen eingesetzt werden. Derartige Biofilter umfassen eine Filterschicht und eine Luft-Verteilerkammer, in die ein wasserdampfgesättigtes Rohgas eingeleitet wird. Als zu durchströmendes Filtermaterial können verschiedene Komposte (Rindenkompost, Grünschnittkompost), gerissenes Wurzelholz, gehäckseltes Holz und Rinde, Torf, Kokosfasern und dgl., sowie Mischungen aus diesen Materialien eingesetzt werden. Überdies ist ebenso eine Kombination eines derartigen Biofilters mit einem vorgeschalteten Biowäscher insbesondere auch zu vorgenannten Zwecken bekannt.

Hochtoxische organische Verbindungen, wie insbesondere Dioxine und Furane, die insbesondere in Abbrand-, Verbrennungsgasen, Industrieabgasen und dgl. enthalten sind, machen jedoch bei der Entsorgung bzw. Reinigung von derartigen Abgasen größere Schwierigkeiten und erfordern überwiegend speziell entwickelte, hochtechnisierte und meist auch kostspielige Vorrichtungen und Anordnungen.

Mit Rücksicht darauf ist es Aufgabe der Erfindung, ein einfaches und nicht besonders aufwendiges Verfahren zum Abbau von in Abwässern und/oder Abgasen enthaltenen toxischen organischen Verbindungen der eingangs genannten Art zu schaffen, das platzsparend und damit auch im Betrieb einfach durchgeführt werden kann.

Diese Aufgabe wird erfindungsgemäß dadurch gelöst, dass die mit toxischen organischen Verbindungen belasteten Abwässer und/oder Abgase vorerst in ein wässeriges, basisches, alkalisches/erdalkalisches Lösungs-/Aufschlämmungsbad zur Instabilisierung der toxischen organischen Verbindungen geleitet werden und dass dann aufsteigend das die instabilisierten toxischen organischen Verbindungen haltige Lösungs-/Aufschlämmungsbad in eine darüber angeordnete aus einem Gemisch von aufbereiteten, mit Bentonit, Zeolith und/oder Kalk mit einer Teilchengröße < 200µm versetzten Holzstoffen und Torf gebildete Kapillarmasse geführt wird.

In einfacher und vorteilhafter Weise werden dabei die toxischen organischen Verbindungen aufgespalten bzw. abgebaut und in umweltverträgliche Verbindungen zerlegt, die zusammen mit den verfahrensgemäß entstehenden gasförmigen und/oder flüssigen, gegebenenfalls wiederverwertbaren Endprodukten abgezogen oder auch direkt an die Atmosphäre abgegeben werden können.

In einer bevorzugten Ausführungsform des erfindungsgemäßen Verfahrens wird über der Kapillarmasse eine Torfschicht angeordnet. Diese Maßnahme wird vor allem aus Sicherheitsgründen vorgenommen, um sicherzustellen, dass keine toxischen organischen Verbindungen mehr in den verfahrensgemäßen Endprodukten zu finden sind.

Nach einem weiteren Merkmal des erfindungsgemäßen Verfahrens werden als aufbereitete Holzstoffe in der Kapillarmasse Refiner-Holzstoffe verwendet. Diese bestehen aus mechanisch gewonnenen Primärfaserstoffen, wobei ersatzweise auch Hackschnitzel oder Holzschliffe einsetzbar sind.

Zur Gewinnung von Refiner-Holzstoffen werden üblicherweise Hackschnitzel als Ausgangsmaterial verwendet, wobei verschiedene Verfahren zur Aufbereitung, wie beispielsweise das Defibratorverfahren, eingesetzt werden können. Beim Defibratorverfahren handelt es sich um einen thermisch-mechanischen Bearbeitungsprozess, bei welchem die Hackschnitzel zuerst in einem Vorwärmer mit heißem Dampf vorgewärmt bzw. aufgeweicht und anschließend in einem Mahlaggregat zu Fasern vermahlen werden. Üblicherweise kommen solche Refiner-Holzstoffe bei der Fertigung von MDF-Platten (Mitteldichte Holzfaserplatten) zum Einsatz.

Ein Merkmal des erfindungsgemäßen Verfahrens besteht darin, dass als Lösungs-/ Aufschlämmungsbad eine wässerige homogene mit Calciumhydroxid basifizierte Lösung/Aufschlämmung von Calciumsulfat eingesetzt wird. Bevorzugt wird eine Gipslösung/-aufschlämmung mit Kalk verwendet, wobei wesentlich ist, dass die gesamte Lösung/Aufschlämmung in einer gleichmäßig homogenisierten Form vorliegt. Das Lösungs-/Aufschlämmungsbad kann jedoch auch irgendeine günstig verfügbare Alkalisalz- und/oder andere Erdalkalisalzlösung/-aufschlämmung sein, die mit entsprechenden Alkali- oder anderen Erdalkaliverbindungen basifiziert ist.

Nach einem weiteren Merkmal des Verfahrens der Erfindung wird das alkalische/erdalkalische Lösungs-/Aufschlämmungsbad auf einen pH-Wert zwischen 8 und 11, vorzugsweise zwischen 8 und 9 eingestellt.

Erfindungsgemäß beträgt die Verfahrenstemperatur über alle Verfahrensstufen 1 bis 25° C, vorzugsweise 3 bis 4° C. Das Verfahren kann in allen Verfahrensstufen bei einem Unterdruck von 0,2 bis 0,8 bar, vorzugsweise 0,5 bar durchgeführt werden.

Das erfindungsgemäße Verfahren wird im Folgenden anhand der Zeichnungsfigur näher erläutert, die eine schematische Anordnung zum Abbau von in Abwässern und/oder Abgasen enthaltenen toxischen organischen Verbindungen zur Durchführung des erfindungsgemäßen Verfahrens zeigt.

Ein Aufbereitungstank 1 ist im unteren Bereich mit einem wässerigen, basischen alkalischen/erdalkalischen Lösungs-/Aufschlämmungsbad 3 befüllt, das mit toxischen organischen Verbindungen belastete Abwässern und/oder Abgasen 2 beschickt wird. Dieses Lösungs-/Aufschlämmungsbad 3 wird geeigneterweise aus einer homogenen wässerigen Calciumsulfatlösung/-aufschlämmung, vorzugsweise Gipslösung/- aufschlämmung gebildet, die zur Basifizierung mit einer Lösung/Aufschlämmung von Calciumhydroxid (Kalk) versetzt wird. Das Lösungs-/Aufschlämmungsbad 3 wird dabei auf einen pH-Wert zwischen 8 und 11 eingestellt, wobei der bevorzugte pH-Wertbereich zwischen 8 und 9 liegt. In diesem basischen Milieu in dem Lösungs-/ Aufschlämmungsbad 3 werden die von den eingeleiteten Abwässern oder Abgasen 2 mitgeführten toxischen organischen Verbindungen instabilisiert.

Aufsteigend angrenzend über dem Lösungs-/Aufschlämmungsbad 3 ist eine aus einem Gemisch von Holzstoffen, vorzugsweise Refiner-Halzstoffen, und Torf gebildete Kapillarmasse 4 angeordnet, die zu einem geringfügigen Anteil mit Bentonit, Zeolith und/oder Kalk mit einer Teilchengröße < 200 µm, bezogen auf die gesamte Kapillarmasse versetzt ist. Vorzugsweise wird der Holzstoff mit dem feinteiligen Bentonit, Zeolith und/oder Kalk versetzt. Der Kapillarmasse können auch feinteilige Kunststoffe, Mischkunststoffe und Kunststoffverbindungen zugesetzt sein Von der Kapillarmasse 4 wird kontinuierlich Lösung/Aufschlämmung, vornehmlich über Kapillarkräfte aus dem Lösungs-/Aufschlämmungsbad 3 aufgenommen und durch die Kapillarmasse 4 geführt. Dabei werden die instabilisierten toxischen Verbindungen im Rahmen eines chemisch/physikalischen Prozesses aufgespalten bzw. abgebaut und in einzelne unschädliche Verbindungen zerlegt. Das Verfahren wird bei einer Verfahrenstemperatur von 1 bis 25° C, vorzugsweise 3 bis 4° C über alle Verfahrensstufen hin durchgeführt. Weiterhin kann das Verfahren bei einem Unterdruck von 0,2 bis 0,8 bar, vorzugsweise 0,5 bar ebenfalls in allen Verfahrensstufen durchgeführt werden.

Vorteilhafterweise wird die Kapillarmasse 4 sozusagen als Sicherheitsfaktor noch mit einer reinen Torfschicht 5 (strichliert dargestellt) überschichtet, um sicher zu gewährleisten, dass tatsächlich alle toxischen organischen Verbindungen aufgespalten bzw. in unschädliche Verbindungen zerlegt werden.

Die zerlegten umweltverträglichen Verbindungen können dann zusammen mit den verfahrensgemäß entstehenden gasförmigen und/oder flüssigen, gegebenenfalls wiederverwertbaren Endprodukten 6 abgezogen oder auch direkt an die Atmosphäre abgegeben werden.

Hinsichtlich der Durchführung des erfindungsgemäßen Verfahrens ist festzuhalten, dass die einzelnen Komponenten der zum Einsatz kommenden Materialien sowie die in den jeweiligen Verfahrensstufen vorliegenden Milieus mittels laufender Messungen während des gesamten Verfahrensablaufs überwacht bzw. gesteuert werden, wobei beispielsweise je nach Bedarf bzw. in Abhängigkeit der Messergebnisse eine Materialbeschickung bzw. -abführung regelbar ist. Diese Maßnahme kann zumindest einer Unterstützung einer kontinuierlichen Durchführung des Verfahrens dienen.

Um allerdings wirksam eine kontinuierliche Durchführung des erfindungsgemäßen Verfahrens zu gewährleisten, werden zwei oder mehrere Aufbereitungstanks parallel geschaltet angeordnet. Die einzelnen Abschnitte im Aufbereitungstank arbeiten ähnlich Filterboxen, wobei diese in Abhängigkeit laufend erfolgender Überwachungsmessungen vor bzw. bei Erreichung festgelegter Messgrenzwerte bzw. bei jeweiliger Sättigung umgeschaltet werden, d.h. der gerade in Betrieb befindliche Aufbereitungstank wird abgeschaltet und zumindest ein parallel geschalteter wird eingeschaltet. In der Abschaltphase werden die in den einzelnen Verfahrensabschnitten eingesetzten Materialien ausgetauscht bzw. regeneriert, so dass im Sinne eines kontinuierlichen Verfahrensablaufes stets zumindest ein Aufbereitungstank zur Durchführung des Verfahrens zum Abbau von in Abwässern und/oder Abgasen enthaltenen toxischen organischen Verbindungen zur Verfügung steht.

Das erfindungsgemäße Verfahren wird nachfolgend anhand einer bevorzugten Ausführungsform näher beschrieben.

Eine untere Kammer eines Aufbereitungstanks ist mit einem Lösungs-/ Aufschlämmungsbad befüllt, das aus einer homogenisierten wässerigen Lösung von Calciumhydroxid besteht, in der feinst vermahlener Kalk und Gips aufgeschlämmt ist. Der pH-Wert des Lösungs-/Aufschlämmungsbades wird anfänglich auf pH 9-10 eingestellt. In diesem Lösungs-/ Aufschlämmungsbad wird mittels eines Kompressors unter Druck zwischen 7 und 12 bar das mit toxischen organischen Verbindungen, wie Chlorkohlenwasserstoffe, Dioxin und/oder Furan belastete, in einem Verbrennungsprozess organischen Materials gebildete Abgas eingeleitet. Mit Hilfe des Kompressors wird die mit dem Lösungs-/Aufschlämmungsbad befüllte Kammer unter einem Druck zwischen 7 und 12 bar gehalten.

Im Zuge der kontinuierlichen Einleitung des Abgases fällt der pH-Wert des Bades ab, wobei aus der Calciumhydroxidlösung und dem Kalk Gips gebildet wird. In Abhängigkeit laufender begleitender pH-Wert Messung wird einerseits gebildeter Gips abgezogen und anderseits je nach Bedarf Calciumhydrixid und Kalk zugeführt.

In dem basischen wässerigen Milieu in der in der Badkammer werden die im Abgas enthaltenen toxischen organischen Verbindungen instabilisiert, wobei eine ausreichende Verweilzeit des Abgases im Lösungs-/Aufschlämmungsbad ein wesentliches Kriterium ist.

Über einen am oberen Ausgang aus dem Aufbereitungstank angeordneten Ventilator erzeugten Unterdruck von 0,5 bis 0,8 bar wird flüssiges Medium aus der Badkammer in eine darüber angeordnete Kammer gesaugt, wobei das im Aufbereitungstank aufgebaute Druckgefälle eine ausreichende Verweilzeit des Abgases in dem Lösungs-/Aufschlämmungsbad gewährleistet.

Die darüber angeordnete Kammer ist mit einer Kapillarmasse befüllt, die aus Refiner-Holzstoffen und vorliegendenfalls anderen Fasermaterial, wie z.B.Papier, statt dessen auch Hanf, Leinen, Baumwolle, Zellstoff, Kunststoffe, Mischkunststoffe, jeweils aufgefasert oder feinteilig, und dgl. verwendet werden können, gebildet ist. Zur Verbesserung der Oberfläche ist vorliegendenfalls mit Metallverbindungen versetzte Biokohle in einer Menge von ≤ 1 Gew.-%, bezogen auf die Kapillarmasse zugesetzt.

Mit Hilfe der Kapillarmasse werden die in der darunter angeordneten Badkammer instabilisierten toxischen organischen Verbindungen aufgespalten und die Umwelt nicht mehr belastenden Bestandteile zerlegt.

Über der die Kapillarmasse enthaltenden Kammer ist noch eine torfhaltige Schicht angeordnet, die einen Torfanteil von ≤ 5 Gew-%, vorliegendenfalls 3 Gew-% mit einer Feuchte von 80 %, bezogen auf Trockenmasse, aufweist. Diese torfhaltige Schicht ist verfahrensmäßig nicht unbedingt notwendig, sondern dient lediglich Sicherheitsgründen, um allenfalls doch noch im abgezogenen flüssigen Medium enthaltene toxische Verbindungen jedenfalls durch Zerlegung unschädlich zu machen.

Die Verfahrenstemperatur beträgt über alle Verfahrensstufen hin vorzugsweise 3-4° C.

Einhergehend mit diesem Verfahren wurden Messungen hinsichtlich einzelner Bestandteile des Abgasstroms am Eintritt in die Aufbereitungsanlage - als "Rohgas" bezeichnet, und des Gasstroms am Austritt aus der Aufbereitungsanlage - als "Reingas" bezeichnet durchgeführt.
In den nachfolgenden Tabellen 1 bis 3 sind die ermittelten Messergebnisse zu ersehen.

In Tabelle 1 sind die Konzentrationen an polychlorierten Dibenzo-p-dioxinen und Dibenzofuranen angeführt. Die Ergebnisse beinhalten die Gesamtgehalte der 2,3,7,8-substituierten PCDD und PCDF und die Berechnung der 2,3,7,8-TCDD-Toxizitäts-Äquivalente nach dem I-TEF-Modell.

**Tabelle 1: Ergebnisse der PCDD/PCDF-Messungen**

| Parameter | polychlorierte Dibenzodioxine und Dibenzofurane | | | |
|---|---|---|---|---|
| | Rohgas | | Reingas | |
| | | I-TEF | | I-TEF |
| | [ng/Nm³] | [ngTE/Nm³] | [ng/Nm³] | [ngTE/Nm³] |
| 2378-T4CDD | 0,0018 | 0,00179 | 0,0001 | 0,00005 |
| 12378-P5CDD | 0,0012 | 0,00060 | 0,0002 | 0,00011 |
| 123478-H6CDD | 0,0005 | 0,00005 | 0,0003 | 0,00003 |
| 123678-H6CDD | 0,0008 | 0,00008 | 0,0007 | 0,00007 |
| 123789-H6CDD | 0,0020 | 0,00020 | 0,0006 | 0,00006 |
| 1234678-H7CDD | 0,0027 | 0,00003 | 0,0051 | 0,00005 |
| O8CDD | 0,0034 | 0,000003 | 0,0045 | 0,000005 |
| **2,3,7,8-PCDD** | 0,0124 | **0,0027** | 0,0115 | **0,0004** |
| 2378-T4CDF | 0,0236 | 0,00236 | 0,0010 | 0,00010 |
| 12378-P5CDF a) | 0,0073 | 0,00037 | 0,0010 | 0,00005 |
| 23478-P5CDF | 0,0209 | 0,0104 | 0,0018 | 0,00091 |
| 123478-H6CDF b) | 0,0039 | 0,00039 | 0,0020 | 0,00020 |
| 123678-H6CDF | 0,0037 | 0,00037 | 0,0020 | 0,00020 |
| 123789-H6CDF | 0,0009 | 0,00009 | 0,0007 | 0,00007 |
| 234678-H6CDF | 0,0054 | 0,00054 | 0,0020 | 0,00020 |
| 1234678-H7CDF | 0,0067 | 0,00007 | 0,0109 | 0,00011 |
| 1234789-H7CDF | 0,0011 | 0,00001 | 0,0017 | 0,00002 |
| O8CDF | 0,0024 | 0,000002 | 0,0069 | 0,000007 |
| **2,3,7,8-PCDF** | 0,076 | **0,0146** | 0,030 | **0,0019** |
| 2,3,7,8-PCDD+PCDF | 0,088 | 0,0174 | 0,042 | 0,0023 |

| | | | | |
|---|---|---|---|---|
| Die Rohgaskonzentrationen sind auf Normbedingungen (0° C, 1013 hPa) und trockenes Abgas bezogen a) nicht getrennt von 1,2,3,4,8-P5CDF b) nicht getrennt von 1,2,3,4,7,9-H6CDF | | | | |

Durch Aufsummieren der Nachweisgrenzenkonzentrationen aller 17 im I-TEF-Modell berücksichtigten Kongenere und Gewichtung mit den entsprechenden Äquivalenzfaktoren wird die Toxizitäts-Äquivalent-Grenzkonzentration ermittelt. Diese Grenzkonzentration gibt den theoretisch maximal möglichen Toxizitäts-Äquivalentwert für den Fall an, dass die 17 im Modell enthaltenen toxischen PCDD/PCDF-Kongenere genau mit den Nachweisgrenzenkonzentrationen vorliegen würden. Für die gegenständlichen Messungen ergeben sich Toxizitäts-Äquivalent-Grenzkonzentrationen für die PCDD und PCDF von 0,00004 ng/Nm³ (Rohgas) und 0,0005 ng/Nm³ (Reingas).

Es ist darauf hinzuweisen, dass das toxische 1,2,3,7,8-P5CDF chromatographisch nicht vom 1,2,3,4,8-P5CDF zu trennen ist Gleiches gilt für die Verbindungen 1,2,3,4,7,8-H6CDF und 1,2,3,4,7,9-H6CDF. Dies bedeutet, dass die Ergebnisse auf der sicheren Seite liegen.

Die Rauchgaskonzentrationen an polycyclischen aromatischen Kohlenwasserstoffen (PAK) sind in Tabelle 2 angeführt. Die Ergebnisse beinhalten die Einzelwerte, die Gasamtgehalte der 16 PAK nach EPA und den Gehalt laut DIN 38409 H 13 (6 Verbindungen). Die Nachweisgrenzen der PAK liegen im Bereich von 0,0001 µg/Nm³.

**Tabelle 2: Ergebnisse der PAK-Messungen**

| Parameter | polyzyklische aromatische Kohlenwasserstoffe | |
|---|---|---|
| | Rohgas | Reingas |
| | [µg/Nm3] | [µg/Nm3] |
| Naphthalin | 139 | 0,79 |
| Acenaphthylen | 27 | 0,052 |
| Acenaphten | 1,1 | 0,011 |
| Fluoren | 4,4 | 0,046 |
| Phenanthren | 27 | 0,40 |
| Anthracen | 2,0 | 0,012 |
| Fluoranthen | 5,8 | 0,084 |
| Pyren | 5,3 | 0,071 |
| Benz(a)anthracen | 0,56 | 0,007 |
| Chrysen | 0,95 | 0,011 |
| Benzo(b)fluoranthen | 0,69 | 0,0051 |
| Benzo(k)fluoranthen | 0,18 | 0,0011 |
| Benzo(a)pyren | 0,26 | 0,0013 |
| Indeno(1,2,3-c,d)pyren | 0,31 | 0,0031 |
| Benzo(ghi)perylen | 0,37 | 0,0024 |
| Dibenz(ac,ah)anthracen | 0,042 | 0,0002 |
| PAK (EPA) a) | **215** | **1,5** |
| PAK (DIN 38409 H13) b) | **7,6** | **0,10** |

| | | |
|---|---|---|
| Die Rohgaskonzentrationen sind auf Normbedingungen (0° C, 1013 hPa) und trockenes Abgas bezogen. a) PAK (EPA) Summe der 16 untersuchten polycyclischen aromatischen Kohlenwasserstoffe b) PAK (DIN 38409 H 13) Summe der 6 folgenden polycyclischen aromatischen Kohlenwasserstoffe: Fluoranthen (C₁₆H₁₀), Benzo(a)pyren (C₂₀H₁₂), Benzo(b)fluoranthen (C₂₀H₁₂), Benzo(k)fluoranthen (C₂₀H₁₂), Benzo(g.h.i)perylen (C₂₂H₁₂), Indeno(1,2,3-c,d)pyren (C₂₂H₁₂) | | |

Die vorliegenden Messergebnisse zeigen, dass im Reingas am Austritt aus der Aufbereitungsanlage deutlich niedrigere Werte als im Rohgas am Eintritt in die Aufbereitungsanlage. Eine Verfälschung der Reingaswerte durch rückströmendes Rauchgas aus dem Bereich der Einbindung in die Reingasleitung in dem Kamin erscheint zudem wahrscheinlich zu sein.

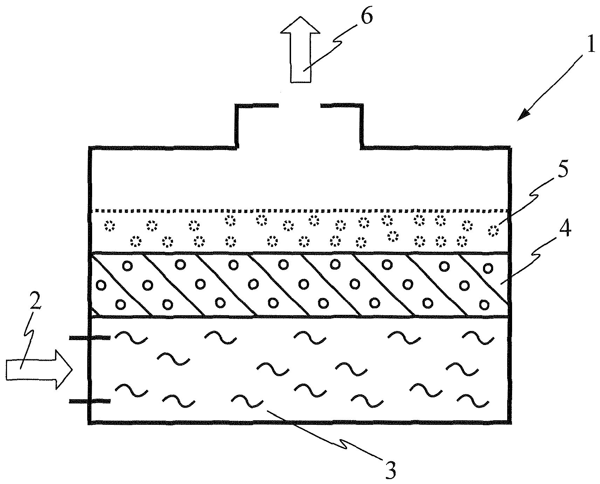

## Patentansprüche

1. Verfahren zum Abbau von in Abwässern und/oder Abgasen enthaltenen toxischen organischen Verbindungen, wobei die mit toxischen organischen Verbindungen belasteten Abwässer und/oder Abgase vorerst in ein wässeriges, basisches, alkalisches/erdalkalisches Lösungs-/Aufschlämmungsbad zur Instabilisierung der toxischen organischen Verbindungen geleitet werden, **dadurch gekennzeichnet, dass** dann aufsteigend das die instabilisierten toxischen organischen Verbindungen haltige Lösungs-/Aufschlämmungsbad in eine darüber angeordnete aus einem Gemisch von aufbereiteten, mit Bentonit, Zeolith und/oder Kalk mit einer Teilchengröße < 200µm versetzten Holzstoffen und Torf gebildete Kapillarmasse geführt wird.

2. Verfahren nach Anspruch 1, **dadurch gekennzeichnet, dass** über der Kapillarmasse eine Torfschicht angeordnet wird.

3. Verfahren nach Anspruch 1, **dadurch gekennzeichnet, dass** als aufbereitete Holzstoffe in der Kapillarmasse Refiner-Holzstoffe verwendet werden.

4. Verfahren nach Anspruch 1, **dadurch gekennzeichnet, dass** der Anteil von Bentonit, Zeolith und/oder Kalk bezogen auf die Kapillarmasse 0,3 bis 5 %, vorzugsweise 0,5 bis 1 % beträgt.

5. Verfahren nach Anspruch 1, **dadurch gekennzeichnet, dass** als Lösungs-/ Aufschlämmungsbad eine wässerige homogene mit Calciumhydroxid basifizierte Calciumsulfatlösung eingesetzt wird.

6. Verfahren nach Anspruch 1 oder 5, **dadurch gekennzeichnet, dass** das alkalische/erdalkalische Lösungs-/Aufschlämmungsbad einen pH-Wert zwischen 8 und 11, vorzugsweise zwischen 8 und 9 aufweist.

7. Verfahren nach Anspruch 1, **dadurch gekennzeichnet, dass** die Verfahrenstemperatur über alle Verfahrensstufen 1 bis 25° C, vorzugsweise 3 bis 4° C beträgt.

## Claims

1. Method for breakdown of toxic organic compounds contained in wastewaters and/or waste gases whereby the wastewaters and/or waste gases loaded with toxic organic compounds are first fed into an aqueous, basic, alkali/alkaline earth solution/suspension bath for destabilization of the toxic organic compounds, **characterized by** the fact that, the solution/suspension bath containing the destabilized toxic organic compounds is then introduced in ascending fashion to a capillary mass arranged above it, formed from processed pulps and peat mixed with bentonite, zeolite and/or lime with a particle size <200 µm.

2. Method according to claim 1, **characterized by** the fact that a peat layer is arranged above the capillary mass.

3. Method according to claim 1, **characterized by** the fact that refiner pulps are used as process pulps in the capillary mass.

4. Method according to claim 1, **characterized by** the fact that the percentage of bentonite, zeolite and/or lime referred to capillary mass is 0.3 to 5%, preferably 0.5 to 1%.

5. Method according to claim 1, **characterized by** the fact that an aqueous homogeneous calcium sulfate solution basified with calcium hydroxide is used as solution/suspension bath.

6. Method according to claim 1 or 5, **characterized by** the fact that the alkali/alkaline earth solution/suspension bath has a pH value between 8 and 11, preferably between 8 and 9.

7. Method according to claim 1, **characterized by** the fact that the process temperature over all process stages is 1 to 25°C, preferably 3 to 4°C.

## Revendications

1. Procédé pour la dégradation de composés organiques toxiques contenus dans des eaux résiduaires et/ou des effluents gazeux, dans lequel on envoie d'abord les eaux résiduaires et/ou les effluents gazeux chargés de composés organiques toxiques dans un bain de dissolution/de mise en suspension aqueux, basique, alcalin/alcalino-terreux, pour instabiliser les composés organiques toxiques, **caractérisé en ce que** le bain de dissolution/mise en suspension contenant les composés organiques toxiques instabilisés est envoyé en écoulement ascendant dans une masse capillaire, disposée par-dessus, formée d'une masse capillaire formée de pâte de bois et de tourbe, préparés et auxquels ont été ajoutés de la bentonite, une zéolite et/ou de la chaux ayant une granulométrie < 200 µm.

2. Procédé selon la revendication 1, **caractérisé en ce qu'**une couche de tourbe est disposée par-dessus la masse capillaire.

3. Procédé selon la revendication 1, **caractérisé en ce qu'**on utilise en tant que pâte de bois préparée dans la masse capillaire des pâtes mécaniques de raffineur.

4. Procédé selon la revendication 1, **caractérisé en ce que** la proportion de bentonite, de zéolite et/ou de chaux, rapportée à la masse capillaire, est de 0,3 à 5 %, de préférence de 0,5 à 1 %.

5. Procédé selon la revendication 1, **caractérisé en ce qu'**on utilise en tant que bain de dissolution/mise en suspension une solution aqueuse homogène de sulfate de calcium alcalinisée par de l'hydroxyde de calcium.

6. Procédé selon la revendication 1 ou 5, **caractérisé en ce que** le bain de dissolution/mise en suspension alcalin/alcalino-terreux présente un pH compris entre 8 et 11, de préférence entre 8 et 9.

7. Procédé selon la revendication 1, **caractérisé en ce que** la température du procédé est, sur toutes les étapes du procédé, de 1 à 25°C, de préférence de 3 à 4°C.
